Europäisches Patentamt

European Patent Office

Office européen des brevets

(19)

(11) Veröffentlichungsnummer: **0 324 334 B1**

(12) **EUROPÄISCHE PATENTSCHRIFT**

(45) Veröffentlichungstag der Patentschrift:
09.10.91 Patentblatt 91/41

(51) Int. Cl.$^5$: **C08L 33/06**, C08F 220/28,
C08F 8/14, C09D 133/14

(21) Anmeldenummer: **89100001.0**

(22) Anmeldetag: **02.01.89**

(54) **Wasserverdünnbare Bindemittel, ein Verfahren zu ihrer Herstellung und ihre Verwendung.**

(30) Priorität: **09.01.88 DE 3800389**

(43) Veröffentlichungstag der Anmeldung:
**19.07.89 Patentblatt 89/29**

(45) Bekanntmachung des Hinweises auf die
Patenterteilung:
**09.10.91 Patentblatt 91/41**

(84) Benannte Vertragsstaaten:
**AT BE DE ES FR GB IT NL SE**

(56) Entgegenhaltungen:
**EP-A- 0 108 373**

(73) Patentinhaber: **BAYER AG**
**W-5090 Leverkusen 1 Bayerwerk (DE)**

(72) Erfinder: **Blum, Harald, Dr.**
**Auf dem Westkamp 1**
**W-4175 Wachtendonk 2 (DE)**
Erfinder: **Höhlein, Peter, Dr.**
**Windmühlenweg 3 e**
**W-4152 Kempen 3 (DE)**
Erfinder: **Wieczorrek, Wolfhart**
**Egerstrasse 6**
**W-5000 Köln 90 (DE)**

## Beschreibung

Die Erfindung betrifft wasserverdünnbare Bindemittel auf Basis von a) Hydroxylgruppen und zumindest teilweise neutralisierte Carboxylgruppen aufweisenden Copolymerisaten und b) Vernetzerharzen, ein Verfahren zu ihrer Herstellung und ihre Verwendung in Beschichtungs- oder Dichtmassen.

Copolymerisate von Acryl- und Vinylmonomeren in organischen Lösungsmitteln zeichnen sich durch eine Reihe hervorragender Eigenschaften aus wie z.B. Verseifungs- und Lagerstabilität, geringe Vergilbungsanfälligkeit, Witterungsbeständigkeit und Glanzhaltung. Durch die verwendeten Lösungsmittel kann die Wirtschaftlichkeit der aus den Bindemitteln hergestellten Beschichtungssysteme erheblich beeinträchtigt werden, da die Lösungsmittel beim Einbrennen nicht mit in die Überzüge eingebaut werden, sondern zusätzlich z.B. durch eine Nachverbrennung beseitigt werden müssen, um die Belastung der Umwelt soweit wie möglich zu verringern.

Es ist bekannt (vgl. z.B. G.Y. Talak, S.P. Pontis, Paint & Resin 12/83, S. 34 ff. DE-OS 3209421, EP-A-95263 oder EP-A-105293), wasserverdünnbare Bindemittel auf Copolymerisatbasis einzusetzen, die in der Regel Emulgatoren zur Stabilisierung der wäßrigen Bindemittel enthalten oder noch größere Anteile organischer Hilfslöser aufweisen. Die Emulgatoren können die lacktechnischen Eigenschaften der Überzüge, z.B. Wasser-, Detergentien-, Witterungsbeständigkeit und/oder Glanz negativ beeinflussen.

Die Verwendung größerer Mengen organischer Lösungsmittel in wasserverdünnbaren Bindemitteln ist in der Regel herstellungsbedingt, da dadurch eine rührfähige Viskosität und ein kontrollierter Wärmeaustausch bei der Polymerisation bzw. Polykondensation gewährleistet wird und die damit hergestellten Lacke ein günstigeres Eigenschaftsniveau der entsprechenden Überzüge bezüglich Verlauf, Kraterbildung und Glanz zeigen.

In der EP-A-0218906 werden wasserverdünnbare Copolymerisate beschrieben, die keine Emulgatoren enthalten, und die im Kombination mit Vernetzerharzen zu Lacken mit weniger als 5% organischen Lösungsmitteln verarbeitet werden können. Die Lacke und die daraus erhaltenen Filme zeichnen sich durch ein insgesamt ausgewogenes Eigenschaftsniveau aus.

Für verschiedene Anwendungszwecke, wie z.B. bei der Verwendung als Clearcoat-Bindemittel ist es wünschenswert, sowohl die Elastizitätswerte als auch die Applikationssicherheit bei höheren Schichtstärken unter ungünstigen Bedingungen wie z.B. kurze Ablüftzeiten, hohe Luftfeuchtigkeit, niedrige Temperaturen, zu verbessern.

Überraschenderweise wurde nun gefunden, daß wasserverdünnbare Bindemittel der in EP-A-0218906 weitgehend entsprechenden Art bezüglich der zuletztgenannten Eigenschaften, insbesondere bezüglich der Applikationssicherheit bei höheren Schichtstärken ganz beträchtlich verbessert werden können, wenn die in den Copolymerisaten vorliegenden Hydroxylgruppen zumindest teilweise vor, während oder im Anschluß an die Herstellung der Copolymerisate mit Lactonen im Sinne einer zwischen den Hydroxylgruppen und den Lactonen unter Ringöffnung ablaufenden Esterbildung modifiziert werden.

Die Modifizierung von Hydroxylgruppen aufweisenden Copolymerisaten mit Lactonen, insbesondere mit ε-Caprolacton ist zwar bereits aus DE-OS 3027776, US-PS 4082816 oder EP-A-0151495 und EP-A-108373 bekannt, jedoch betreffen die Systeme dieser Vorveröffentlichungen lösungsmittelhaltige Beschichtungsmittel ohne jede Bezugnahme auf wasserverdünnbare Bindemittel und das insbesondere mit wasserverdünnbaren Beschichtungsmitteln verbundene Problem des Aufbaus höherer Schichtdicken, so daß aus dieser Vorveröffentlichungen keinerlei Anregungen bezüglich der Lösung der erfindungsgemäßen Aufgabe entnommen werden können.

Gegenstand der Erfindung sind wasserverdünnbare Bindemittel, bestehend im wesentlichen aus einem Gemisch aus

a) 60 bis 95 Gew.-Teilen eines Carboxylgruppen und/oder Säureanhydridgruppen, sowie Hydroxylgruppen aufweisenden Copolymerisats, dessen Carboxyl- bzw. Säureanhydridgruppen zumindest teilweise zwecks Gewährleistung der Wasserlöslichkeit bzw. -dispergierbarkeit des Bindemittels in Wasser in Carboxylatgruppen überführt worden sind, und das durch Copolymerisation von

a1) 4 bis 25 Gew.-Teilen einer $\alpha,\beta$-ungesättigten Carbonsäure-Komponente, bestehend aus mindestens einer Verbindung ausgewählt aus der Gruppe bestehend aus Methacrylsäure, Acrylsäure, Maleinsäure, Fumarsäure, Itaconsäure und Maleinsäureanhydrid,

a2) insgesamt 5 bis 40 Gew.-Teilen mindestens eines Hydroxyalkylesters der Methacrylsäure oder der Acrylsäure mit 2 bis 4 Kohlenstoffatomen im Hydroxyalkylrest,

a3) insgesamt 15 bis 55 Gew.-Teilen mindestens eines olefinischen Monomeren, ausgewählt aus der Gruppe bestehend aus (i) gegebenenfalls Alkyl- und/oder Chlor-substituierten Vinyl- oder Isopropenyl-Benzolen mit insgesamt 8 bis 12 Kohlenstoffatomen und (ii) Methacrylsäurealkylestern mit 1 bis 4 Kohlenstoffatomen im Alkylrest,

a4) insgesamt 20 bis 80 Gew.-Teilen mindestens eines olefinisch ungesättigten Monomeren, ausgewählt aus der Gruppe bestehend aus (i) Hydroxylgruppen-freien Acrylsäureestern mit 1 bis 18 Kohlenstoffatomen in der Alkoholkomponente und (ii) Hydroxylgruppenfreien Methacrylsäureestern mit 5 bis 18 Kohlenstoffatomen in der Alkoholkomponente gegebenenfalls unter Mitverwendung von

a5) insgesamt bis zu 20 Gew.-Teilen an anderen ein-oder mehrfach ungesättigten Monomeren erhalten worden ist und

b) 5 bis 40 Gew.-Teilen eines Vernetzerharzes, dadurch gekennzeichnet, daß die in dem Copolymerisat a) vorliegenden Hydroxylgruppen zumindest zu 30% in mit einem Lactonen modifizierter Form vorliegen. Gegenstand der Erfindung ist auch ein Verfahren zur Herstellung dieser Bindemittel

a) durch Copolymerisation der unter a1) bis a5) genannten Monomeren, zumindest teilweise Überführung der in den Copolymerisaten vorliegenden Carbonsäure- und/oder Carbonsäureanhydridgruppen in Carboxylatgruppen zwecks Gewährleistung der Löslichkeit bzw. Dispergierbarkeit der Bindemittel in Wasser, und

Vermischen des so erhaltenen Copolymerisats mit

b) 5 bis 40 Gew.-Teilen eines Vernetzerharzes und gegebenenfalls mit

c) aus der Lacktechnologie üblichen Hilfs- und Zusatzmitteln dadurch gekennzeichnet, daß man die in den Copolymerisaten a) vorliegenden Hydroxylgruppen zumindest zu 30% vor, während oder im Anschluß an die Copolymerisationsreaktion durch Umsetzung mit Lactonen unter ringöffnen- der Esterbildung modifiziert.

Gegenstand der Erfindung ist auch die Verwendung dieser Bindemittel für wasserverdünnbare Lacke, Beschichtungs- oder Dichtmassen, insbesondere in wäßrigen Klar- und Dicklacken.

Die Copolymerisate a) werden durch Copolymerisation der Monomeren a1) bis a4), gegebenenfalls unter Mitverwendung von Monomeren a5) in den oben angegebenen Mengenverhältnissen hergestellt.

Bei den Monomeren a1) handelt es sich vorzugsweise um Methacrylsäure, Acrylsäure, Maleinsäure und/ oder Maleinsäureanhydrid. Beliebige Gemische dieser Monomeren können ebenfalls verwendet werden. Die Komponente a1) wird vorzugsweise in einer Menge von 7 bis 16 Gew.- Teilen verwendet.

Bei der Komponente a2) handelt es sich vorzugsweise um Hydroxyethylacrylat, Hydroxyethylmethacrylat, 2- und 3- Hydroxypropylacrylat oder -methacrylat, 2-, 3- oder 4- Hydroxybutylacrylat oder -methacrylat oder um beliebige Gemische derartiger Monomerer. Die Komponente a2) wird vorzugsweise in einer Menge von 10 bis 30 Gew.-Teilen verwendet.

Bei der Komponente a3) handelt es sich um Vinyl- oder Isopropenylaromaten wie Styrol, $\alpha$-Methylstyrol, Vinyl-toluol, p-Chlorstyrol, am Kern $C_1$-$C_4$-alkylsubstituierte Styrole oder um Methacrylsäurealkylester mit 1 bis 4 Kohlenstoffatomen im Alkylrest wie Methylmethacrylat, Ethylmethacrylat, die isomeren Propylmethacrylate oder die isomeren Butylmethacrylate oder um beliebige Gemische derartiger ungesättigter Verbindungen. Vorzugsweise besteht die Komponente a3) aus Styrol, Methylmethacrylat, Ethylmethacrylat, n-Butylmethacrylat oder aus beliebigen Gemischen derartiger Verbindungen. Die Komponente a3) wird vorzugsweise in einer Menge von 20 bis 50 Gew.-Teilen verwendet.

Bei der Komponente a4) handelt es sich vorzugsweise um Verbindungen wie beispielsweise Methylacrylat, Ethylacrylat, n-Propylacrylat, Isopropylacrylat, n-Butylacrylat, Isobutylacrylat, tert.-Butylacrylat, 2-Pentyl(meth)acrylat, n-Hexyl(meth)acrylat, 2-Ethylhexyl(meth)acrylat, n-Octyl(meth)acrylat, n-Lauryl(meth)acrylat, n-Stearyl(meth)acrylat, Benzylacrylat oder 2-Phenylethylacrylat. Die Komponente a4) wird vorzugsweise in Mengen von 25 bis 60 Gew.- Teilen verwendet.

Bei der gegebenenfalls mitzuverwendenden Komponente a5) handelt es sich beispielsweise um (i) $\alpha,\beta$-ungesättigte, copolymerisierbare Verbindungen wie z.B. Vinyltriethoxysilan, Vinyltrimethoxysilan, Vinyltriacetoxysilan, Acrylnitril, Methacrylnitril, N-Methylol(meth)acrylsäureamid, N-Methoxymethyl(meth)acrylsäureamid, N-Vinylpyrrolidon oder um beliebige Mischungen derartiger Verbindungen oder um (ii) copolymerisierbare mehrfach ungesättigte Substanzen wie z.B. 1,6-Hexandiolbisacrylsäureester, Trimethylolpropanbisacrylsäureester, Trimethylolpropantrisacrylsäureester, Pentaerythrittrisacrylsäureester, Divinylbenzol, Umsetzungsprodukte von mindestens difunktionellen Isocyanaten mit äquivalenten Mengen Hydroxyalkyl(meth)acrylsäureestern, oligomere Butadienhomo- bzw. -copolymerisate wie sie z.B. in der DE-AS 1186831, in der US-PS 3789040 oder in "Makromolekül" von H.G. Elias, 4, Auflage, Hüthig und Wepf-Verlag, Basel, Heidelberg, New York, S. 676, 744 bis 746, 1012 ff. beschrieben sind, wobei die Butadienhomo- bzw. -copolymerisate üblicherweise ein als Zahlenmittel bestimmtes Molekulargewicht von 500 bis 3000, eine Iodzahl nach Wijs von 300 bis 500 g Iod/g Substanz besitzen, gegebenenfalls bis zu 50%, bezogen auf Gemisch, an anderen Comonomeren, wie z.B. den oben beispielhaft genannten, enthalten und gegebenenfalls funktionelle Gruppen wie z.B. Hydroxyl- und Carboxylgruppen tragen können.

Die Komponente a5) wird in einer Menge von insgesamt bis zu 20 Gew.-Teilen, vorzugsweise bis zu 10 Gew.-Teilen eingesetzt, wobei die unter (ii) beispielhaft genannten mehrfach ungesättigten Verbindungen im allgemeinen maximal in einer Menge von bis zu 3 Gew.-Teilen, insbesondere bis zu 2 Gew.-Teilen verwendet werden.

Die Herstellung der Copolymerisate erfolgt durch eine radikalisch initiierte Copolymerisation der ausgewählten Monomermischungen in organischer Lösung. Dabei wird der Anteil an organischen Lösungsmitteln entweder von vornherein so bemessen, daß ein unter Verwendung des Copolymerisats hergestellter Lack $\leq$ 10%, bevorzugt $\leq$5% und besonders bevorzugt $\leq$2,5% Lösungsmittel enthält, oder alternativ dazu ein Teil des eingesetzten Lösungsmittels aus der Harzschmelze abdestilliert um im fertigen Lack den genannten niedrigen Lösungsmittelanteil zu erhalten.

Als Lösungsmittel für die Copolymerisation können Alkohole, wie z.B. n-Butanol, n-Pentanol, iso-Pentanol, n-Hexanol, Cyclohexanol, Heptanol, Methylglykol, Ethylglykol, Butylglykol, Methoxypropanol, Ethoxypropanol, Butoxypropanol, Methyldiglykol, Ethyldiglykol, Butyldiglykol, Glykolsäuremethylester, Glykolsäureethylester, Glykolsäurebutylester, Milchsäuremethylester, Milchsäureethylester, Milchsäurebutylester und Mischungen dieser und anderer Alkohole sowie Ether wie z.B. Dimethyldiglykol, Dimethylpropylenglykol, andere Lösungsmittel wie z.B. N-Methylpyrrolidon, Solvent-Naphtha, Ethylcarbonat, Butylacetat, Xylol, Toluol, Cyclohexan, Diacetanalkohol, Methylisobutylketon, Aceton, sowie Mischungen der genannten Lösungsmitteln verwendet werden.

Die Auswahl des bzw. des geeigneten Lösungsmittel ist abhängig von der Art und Weise wie der Modifizierungsschritt mit Lacton durchgeführt wird, auf den nachstehend noch näher eingegangen wird.

Als Initiatoren geeignet sind organische Peroxide, wie Dibenzoylperoxid, Di-tert.-butylperoxid, tert.-Butylperoxy-2-ethylhexanoat, Didecanoylperoxid und Azoverbindungen wie Azodiisobuttersäurenitril in Mengen von 0,3 bis 10 Gew.-%.

Zur Erzielung des gewünschten Molekulargewichtes können Regler wie n-Dodecylmercaptan oder Mercaptoethanol in Mengen von 0,01 bis 6% mitverwendet werden.

Die erfindungsgemäßen Copolymerisate haben im allgemeinen mittlere Molekulargewichte von 5000 bis 100000, die z.B. mittels Gelpermeationschromatographie an geeichten Styragelen bestimmt werden können.

Die Copolymerisation wird im allgemeinen bei einer Temperatur von 80 bis 180°C durchgeführt.

Die Copolymerisation wird vorzugsweise in mindestens 60%iger Lösung durchgeführt, wobei im allgemeinen das Lösungsmittel und gegebenenfalls ein Teil der Monomerenmischung vorgelegt und auf die gewünschte Reaktionstemperatur erwärmt wird. Die restliche Monomerenmischung und der Initiator werden während 3 bis 6 Stunden kontinuierlich zugepumpt. Nach beendeter Polymerisation wird ein Teil des Lösungsmittels gegebenenfalls abdestilliert und kann z.B. für weitere Polymerisationsreaktionen wiederverwendet werden.

Die Destillation wird vorzugsweise bei einem Druck von 0,1 bis 0,01 bar bei 60 bis 120°C Kesseltemperatur durchgeführt. Es kann auch bei Normaldruck destilliert werden. Weiterhin kann durch ein verstärktes Inertgaseinleiten (z.B. $N_2$, $CO_2$) das Lösungsmittel ausgetrieben werden.

Der erfindungswesentliche Punkt besteht nun darin, daß die in den Copolymerisaten vorliegenden Hydroxylgruppen zumindest zu 30%, vorzugsweise zu 60 bis 100% mit Lactonen im Sinne einer unter Öffnung des Lactonrings ablaufenden Veresterungsreaktion modifiziert sind. Unter dieser Modifizierung ist sowohl die Anlagerung von einem Lactonmolekül an eine Hydroxylgruppe als auch die Anlagerung von mehreren Lactonmolekülen an eine Hydroxylgruppe unter Ausbildung von, dem jeweiligen Lacton entsprechenden, Oligoester-Einheiten zu verstehen, wobei in allen Fällen endständig erneut Hydroxylgruppen in Form von, dem jeweiligen Lacton entsprechenden, Hydroxyalkylestergruppen vorliegen. Im allgemeinen wird die Lacton-Komponente bei der Modifizierung in einer solchen Menge eingesetzt, daß auf jede unmodifizierte Hydroxylgruppe bis zu 20, vorzugsweise bis zu 5 und besonders bevorzugt bis zu ein Lacton-Molekül entfallen. Geeignete Lactone sind z.B. solche, die 3 bis 15 Kohlenstoffatome im Ring enthalten, wobei die Ringe auch verschiedene Substituenten aufweisen können. Bevorzugte Lactone sind gamma-Butyrolacton, delta-Valerolacton, epsilon-Caprolacton, beta-Hydroxy-beta-methyl-delta-Valerolacton, lambda-Laurinlacton oder deren Gemische. Besonders bevorzugt sind epsilon-Caprolacton und gamma-Butyrolacton.

Die Modifizierung der Hydroxylgruppen mit der Lacton-Komponente kann vor, während oder im Anschluß an die Durchführung der Copolymerisationsreaktion erfolgen.

Eine erste Möglichkeit der Lacton-Modifizierung besteht somit in der direkten Umsetzung der hydroxyfunktionellen Monomeren a2) mit der Lacton-Komponente bei Temperaturen von 100 bis 160°C, gegebenenfalls unter Zugabe geeigneter Katalysatoren z.B. auf Zinnbasis wie z.B. Dibutylzinnoxid, Dibutylzinndilaurat, und unter Durchleiten von Luftsauerstoff. Gegebenenfalls können auch geringe Mengen Polymerisationsinhibitoren wie Hydrochinonmonomethylether oder ähnlich wirkende Substanzen zugesetzt werden. Die Umsetzung wird hierbei, den oben gemachten Ausführungen entsprechend, vorzugsweise in einem solchen Mengenverhältnis durchgeführt, daß mindestens 30% der anschließend einpolymerisierten, hydroxylfunktionellen Monomeren mit mindestens einem Lactonmolekül, gegebenenfalls auch mit mehreren Lactonmolekülen modifiziert sind. Die derart modifizierten, hydroxylfunktionellen Monomeren werden dann gegebenenfalls in Kombination mit nichtmodifizierten, hydroxylfunktionellen Monomeren a2) mit den anderen Monomeren copolymerisiert.

Wird diese Art der Modifizierungsreaktion gewählt, dann ist die Auswahl der Lösungsmittel für die Copolymerisation unkritisch, es kann jedes der oben beispielhaft aufgeführten Lösungsmittel verwendet werden.

Die zweite Möglichkeit die Modifizierung mit Lacton durchzuführen ist die, die Lacton-Komponente als Lösungsmittel bei der Copolymerisation mit vorzulegen oder mit der Monomermischung dem Reaktionsgefäß zuzupumpen. In Abhängigkeit von der Polymerisationstemperatur erfolgt dann während der Polymerisation eine mehr oder weniger schnelle Umsetzung zwischen Lacton und hydroxylfunktionellem Monomeren oder sich bildenden Copolymeren. Je niedriger die Reaktionstemperatur umso mehr hat das Lacton zunächst Lösungsmittelcharakter, so daß zur vollständigen Umsetzung gegen Ende oder nach Abschluß der Polymerisationsreaktion auf eine ausreichend hohe Temperatur aufgeheizt werden muß, um den vollständigen Einbau des Lactons zu gewährleisten. Diese Art der Reaktionsführung erlaubt, z.B. eine Minimierung des Anteils an Lösungsmitteln, da bei niedrigen Polymerisationstemperaturen das Lacton realtiv langsam einbaut und deshalb die Abfuhr der Polymerisationswärme unterstützt und die Rührfähigkeit des Ansatzes verbessert. Nach Abschluß der Polymerisation ist die Reaktionswärme im wesentlichen abgeführt, dann kann die Temperatur erhöht, bzw. ein geeigneter Katalysator zugegeben werden um das Lacton vollständig einzubauen. Diese Reaktion ist dann auch bei hohen Viskositäten beherrschbar.

Eine weitere Möglichkeit, die Modifizierung mit Lacton durchzuführen, ist die Zugabe des Lactons nach Abschluß der Polymerisation zum Reaktionsansatz, d.h. die Umsetzung des Polymerisats mit dem Lacton zu einem Lacton modifizierten Copolymerisat.

Bei den beiden letztgenannten Möglichkeiten ist es vorteilhaft, zunächst keine hydroxylfunktionellen Lösungsmittel mitzuverwenden, da sonst die Möglichkeit besteht, das Lösungsmittel und Modifizierungsreagenz miteinander reagieren.

Bei den beiden letztgenannten Varianten der Durchführung der Modifizierungsreaktion mit Lacton besteht im Prinzip auch die Möglichkeit, daß carboxylgruppenhaltige Monomere bzw. Carboxylgruppen des Polymeren teilweise mit dem Modifizierungsreagenz reagieren. Ein gewisser Anteil an solchen Nebenprodukten ist für die erfindungsgemäßen Produkte ohne schädlichen Einfluß.

Die Lacton-modifizierten Copolymerisate werden im Anschluß an ihre Herstellung durch Zugabe eines geeigneten Neutralisationsmittels in eine wasserlösliche bzw. -dispergierbare Form gebracht. Dazu kann das Neutralisationsmittel und gegebenenfalls gleichzeitig das Wasser portionsweise unter Rühren zu der heißen Harzschmelze gegeben werden, oder man gießt die Harzschmelze in eine auf etwa 80°C erwärmte wäßrige Lösung des Neutralisationsmittels und rührt noch 1 bis 2 Stunden bei 70°C nach.

Zur Neutralisation können organische Amine und wasserlösliche anorganische Basen, z.B. Natrium- und Kaliumhydroxid oder Ammoniak verwendet werden.

Bevorzugt sind organische Amine wie Triethylamin, Diethanolamin, Triethanolamin, Methyldiethanolamin, Diethylethanolamin, Dimethylethanolamin, Butanolamin, Dibutanolamin, Morpholin und Ammoniak sowie Mischungen dieser Neutralisationsmittel, gegebenenfalls mit anderen, auch höhermolekularen Ether- oder Estergruppen aufweisenden Aminen. In der wäßrigen Copolymerisatdispersion und nach Neutralisation hat man wenigstens 20% der neutralisationsfähigen Carboxylgruppe durch Salzbildung neutralisiert, bevorzugt 25 bis 90%.

Der pH-Wert der wäßrigen Harzform beträgt vorzugsweise 6,0 bis 9,5. Die so hergestellten wäßrigen Copolymerisate weisen je nach Neutralisationsgrad und Molekulargewicht Festgehalte von 30 bis 50% bei pumpfähiger Viskosität auf. Der Gehalt der in Wasser gelösten bzw. dispergierten Copolymerisate an Carboxylatgruppen liegt im allgemeinen bei 50 bis 300 Milliäquivalenten pro 100 g Feststoff.

Die Copolymerisatharze sind je nach zugesetzter Menge Neutralisationsmittel und verbleibender Restmenge organischer Lösungsmittel teilweise gelöst und teilweise dispergiert. Die gelösten Anteile nehmen mit steigendem Neutralisationsgrad und mit erhöhten Colöseranteilen zu. Dabei kann die Dispersion über eine kolloidale Lösung zun einer klaren Harzlösung übergehen. Durch Kombination mit Vernetzerharzen und nach Zugabe von Pigmenten und sonstigen in der Lackindustrie bekannten Hilfs- und Zusatzstoffen können aus den Copolymerisaten Lacke mit niedrigem Anteil organischer Lösungsmittel erhalten werden, die auch ohne Dispergierhilfsmittel oder oberflächenaktiven Substanzen sehr gute Lagerstabilität aufweisen.

Zur Herstellung von gebrauchsfertigen Bindemitteln werden die Lacton-modifizierten, in Wasser löslichen bzw. dispergierbaren Copolymerisatharze mit geeigneten Vernetzerharzen b) kombiniert. Die gebrauchsfertigen Bindemittel weisen im allgemeinen 60 bis 95 Gew.-Teile der Copolymerisate a) und 5 bis 40 Gew.-Teile Vernetzerharz b) auf.

Als Vernetzerharze eignen sich beispielsweise Amid- und Amin-Formaldehydharze, Phenolharze, Aldehyd- und Ketonharze wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze wie sie in "Lackkunstharze", H. Wagner, H.F. Sarx, Carl Hanser Verlag München, 1971, beschrieben sind.

Gut geeignet als Vernetzerharz sind auch blockierte Polyisocyanate, beispielsweise auf Basis von Isophorondiisocyanat, Hexamethylendiisocyanat, 1,4-Diisocyanatocyclohexan, Bis-(4-isocyanato-cyclohexyl)-met-

5

han, 1,3-Diisocyanatobenzol, 1,4-Diisocyanatobenzol, 2,4-Diisocyanato-1-methylbenzol, 1,3-Diisocyanato-2-methylbenzol, 1,3-Bisisocyanatomethylbenzol, 2,4-Bisisocyanatomethyl-1,5-dimethylbenzol, Bis-(4-isocyanatophenyl)-propan, Tris-(4-isocyanatophenyl)-methan, Trimethyl-1,6-diisocyanatohexan oder auf Basis von Lackpolyisocyanaten wie Biuretgruppen aufweisenden Polyisocyanaten auf Basis von 1,6-Diisocyanatohexan, Isocyanuratgruppen aufweisenden Polyisocyanaten auf Basis von 1,6-Diisocyanatohexan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie $\varepsilon$-Caprolactam oder Phenole.

Bevorzugte Vernetzerharze sind Melamin- und Harnstoffharze, insbesondere alkylierte Melamin-Formaldehydharze mit 1 bis 8 Kohlenstoffatomen in der Alkylkette wie z.B. butylierte und/oder methylierte oder methoxymethylierte Melaminharze.

Die hydrophile Modifizierung der Copolymerisatkomponente a) reicht im allgemeinen aus, um auch die Dispergierbarkeit der Vernetzerharze, soweit es sich nicht ohnehin um wasserlösliche oder -dispergierbare Substanzen handelt, zu gewährleisten.

Die im wesentlichen aus den Einzelkomponenten a) und b) bestehenden, erfindungsgemäßen wäßrigen Bindemittel können direkt als Klarlack verwendet werden. Es handelt sich im allgemeinen bei den erfindungsgemäßen Bindemitteln um Hitze-vernetzbare Systeme, die bei Temperaturen von oberhalb 120°C, vorzugsweise von 120 bis 180°C in den vernetzten Zustand übergehen.

Den erfindungsgemäßen Bindemittelkombinationen aus den Komponenten a) und b) können gegebenenfalls c) aus der Lacktechnologie übliche Hilfs- und Zusatzmittel der nachstehend beispielhaft genannten Art zugesetzt werden.

Die unter Verwendung der erfindungsgemäßen Bindemittel auf diese Weise hergestellten Lacke können z.B. übliche Pigmente und Füllstoffe, die sowohl organischer als auch anorganischer Natur sein können in Mengen von 30 bis 180%, bezogen auf Bindemittel-Feststoff, enthalten, z.B. Titandioxide, Eisenoxide, Bleioxide, Zinkoxide, Chromoxide, Cadmiumsulfide, Chromate, Sulfate, Silikate von Calcium, Magnesium, Barium, Strontium und Aluminium, Ruß, Talkum, Graphit, Manganphosphat, Zinksulfid, Azofarbstoffe, Phthalocyaninkomplexe, Chinacridone, Anthrachinone, Thioindigofarbstoffe und dergleichen sowie Mischungen dieser und anderer Pigmente.

Übliche Zusatzstoffe wie Antioxidantien, Verlaufshilfsmittel, Antischaummittel, UV-Absorber, Antiabsetzmittel können ebenfalls mitverwendet werden.

Die applikationsfähigen Lacke haben üblicherweise Gesamt-Festgehalte von 30 bis 65% und zeichnen sich durch einen niedrigen Anteil, d.h. $\leq 10\%$, bevorzugt $\leq 5\%$, besonders bevorzugt $\leq 2,5\%$ flüchtige organische Substanzen aus.

Die die erfindungsgemäßen Bindemittel enthaltenden Beschichtungsmittel weisen eine ausgezeichnete Lagerstabilität auf. Selbst bei 3-monatiger Lagerung bei 40°C sind keinerlei Abbauerscheinungen festzustellen.

Die erfindungsgemäßen Bindemittel eignen sich insbesondere zur Herstellung von Klar- und Decklacken, jedoch ebenfalls zur Herstellung von dickschichtigen Beschichtungen oder von Dichtmassen.

Die erfindungsgemäßen Systeme eignen sich insbesondere zur Beschichtung hitzeresistenter Substrate, wobei der Auftrag der Systeme nach den üblichen Verfahren wie z.B. Spritzen, Tauchen, Walzen, Streichen oder Gießen erfolgen kann. Geeignete Substrate sind gegebenenfalls vorbehandelte Materialien wie Metall, Glas, Holz, Kunststoff, Pappe, Keramik oder Papier. Die erfindungsgemäßen Bindemittel eignen sich auch zur Herstellung von Druckfarben für Textilien oder zur Herstellung von Imprägnier- oder Verfestigungsmaterialien für Papier oder Leder.

Die Einbrenntemperaturen der erfindungsgemäßen Systeme betragen im allgemeinen 120 bis 180°C bei Einbrennzeiten von 5 bis 30 Minuten. Vor dem Einbrennen der Beschichtungen erweist sich oftmals eine Ablüftzeit 5 bis 20 Minuten als günstig.

Die Lacke und die daraus hergestellten Beschichtungen zeichnen sich durch eine Reihe von vorteilhaften Eigenschaften aus. Hierzu gehören :

— gute Wasserverdünnbarkeit ;

— problemlose Verarbeitbarkeit und hohe Applikationssicherheit auch unter ungünstigen Bedingungen wie z.B. hoher Luftfeuchtigkeit ;

— Erreichbarkeit hoher Schichtstärken ;

— gute Haftung auf den unterschiedlichsten Substraten ;

— hohe Härte bei gleichzeitig hoher Elastizität der Lackfilme.

In den nachfolgenden Beispielen beziehen sich alle Prozentangaben auf Gewichtsprozente.

Vergleichsbeispiel (in Analogie zu EP-A-218906)

In einem 3-1-Rührkessel, versehen mit Inertgaseinleitung, Heiz-, Kühlvorrichtung und zwei Dosierleitungen, werden 320 g n-Butanol vorgelegt und auf 125°C aufgeheizt. Während 4 Stunden wird dann eine Mischung von 525 g n-Butylacrylat, 300 g Ethylacrylat, 195 g Styrol, 150 g Methylmethacrylat, 75 g Hydroxyethylacrylat, 75 g Hydroxyethylmethacrylat, 180 g Methacrylsäure und 30 g n-Dodecylmercaptan kontinuierlich zugepumpt. Parallel dazu werden 30 g tert.-Butyl-peroxy-2-ethylhexanoat in 30 g n-Butanol in 5 Stunden zudosiert. Die Polymerisationsmischung wird dann noch 3 Stunden bei 125°C gerührt und anschließend das n-Butanol bei Normaldruck abdestilliert, wobei die Destillation durch verstärkte Inertgaseinleitung forciert wird. Der Festgehalt der Harzschmelze nach der Destillation beträgt 91,7%.

Zu der auf etwa 80°C abgekühlten Harzschmelze wird unter Rühren portionsweise eine Lösung von 62,7 g Dimethylethanolamin in 1897 g entionisiertem Wasser zugegeben und nach beendeter Zugabe noch 2 Stunden gerührt.

Beispiel 1

In einem 4-1-Reaktionsgefäß mit Inertgaseinleitung, Rühr-, Kühl- und Heizvorrichtung werden 410 g n-Butoxyethanol vorgelegt und auf 128°C aufgeheizt. Während 4 Stunden wird dann eine Mischung aus 450 g Methacrylsäure, 840 g Methylmethacrylat, 850 g n-Butylacrylat, 200 g Ethylacrylat, 90 g Styrol, 570 g eines Umsetzungsprodukts von 330 g Hydroxyethylmethacrylat und 240 g epsilon-Caprolacton (hergestellt durch Erwärmen und Komponenten für 3 Stunden auf 140°C unter Zugabe von 0,1% tert.-Butylhydrochinon und 0,2% para-Toluolsulfonsäure) und 6 g n-Dodecylmercaptan zudosiert. Parallel dazu werden 171 g einer 70%igen Lösung von tert.-Butyl-peroxy-2-ethylhexanoat in einem Kohlenwasserstoffgemisch in 5 Stunden zudosiert. Anschließend wird noch 2 Stunden bei 128°C gerührt. Die so erhaltene Harzschmelze hat einen Festgehalt von 88,6%.

2820 g dieser Harzschmelze werden in eine auf 70°C erwärmte Lösung von 88,0 g Dimethylethanolamin in 3000 g entionisiertem Wasser eingerührt, noch 2 Stunden bei 70°C gerührt und anschließend filtriert.

Beispiel 2

In einem 5-1-Reaktionsgefäß mit Inertgaseinleitung, Rühr-, Kühl- und Heizvorrichtung werden 580 g Diethylenglykoldimethylether vorgelegt und auf 132°C erwärmt. Während 4 Stunden wird dann eine Mischung aus 450 g Methacrylsäure, 450 g 1,4-Butandiolmonoacrylat, 610 g Methylmethacrylat, 90 g Styrol und 1400 g n-Butylacrylat zudosiert. Parallel dazu werden in 5 Stunden 171 g einer 70%igen Lösung von tert.-Butyl-peroxy-2-ethylhexanoat in einem Kohlenwasserstoffgemisch zudosiert. Anschließend wird noch 1 Stunde bei 132°C gerührt, dann 400 g epsilon-Caprolacton zugegeben und weitere 3 Stunden gerührt. Die so erhaltene Harzschmelze hat einen Festgehalt von 85,7%.

2650 g dieser Harzschmelze werden in eine auf 70°C erwärmte Lösung von 82 g Dimethylethanolamin in 2880 g entionisiertem Wasser eingerührt. Nach 2 Stunden bei 70°C wird filtriert.

Beispiel 3

In einem 3-1-Reaktionsgefäß mit Rühr-, Kühl- und Heizvorrichtung und Inertgaseinleitung werden 117 g Diethylenglykoldimethylether, 93 g epsilon-Caprolacton und 210 g einer Monomermischung aus 190 g Acrylsäure, 200 g Styrol, 800 g n-Butylacrylat, 280 g 1,4-Butandiolmonoacrylat, 140 g 2-Hydroxypropylmethacrylat, 390 g Methylmethacrylat sowie 20 g Mercaptoethanol vorgelegt und auf 115°C erwärmt. Anschließend wird der Rest der Monomermischung in Abmischung mit 127 g epsilon-Caprolacton innerhalb von 4 Stunden und parallel hierzu 146 g einer 70%igen Lösung von tert.-Butyl-peroxy-2-ethylhexanoat in einem Kohlenwasserstoffgemisch innerhalb von 5 Stunden zudosiert, worauf sich noch ein Rühren während 3 Stunden bei 135 bis 140°C anschließt. Die so erhaltene Harzschmelze hat einen Festgehalt von 94,8%. 1934 g dieser Harzschmelze werden mit einer Lösung von 105 g Methyldiethanolamin in 2581 g entionisiertem Wasser versetzt und bei 70°C einige Stunden dispergiert bzw. gelöst.

Die gemäß Vergleichsbeispiel und den erfindungsgemäßen Beispielen erhaltenen wäßrigen Bindemittelkomponenten werden jeweils im Gewichtsverhältnis 80 : 20 (bezogen auf Feststoff) mit einem handelsüblichen Melamin-Formaldehyd-Harz, 90%ig in Isobutanol gelöst (®Cymel 327, Hersteller : Fa. American Cyanamid Company) abgemischt, auf Spritzviskosität verdünnt und auf entfettete Stahlbleche appliziert. Nach 15-minütigem Ablüften bei Raumtemperatur wurden die Filme 20 Minuten bei 140°C eingebrannt und folgende Ergebnisse erhalten :

| | Vergleich | Bsp.1 | Bsp.2 | Bsp.3 |
|---|---|---|---|---|
| Störungsfreie Filmstärke | O | + | + | + |
| Härte | O | + | + | + |
| Elastizität | + | + | + | + |
| Lösungsmittelfestigkeit | O | + | + | + |

dabei bedeutet :

+ : in Ordnung
0 : noch akzeptabel
− : nicht in Ordnung

Störungsfrei erzielbare Filmstärke :

< 35 µm :    −
> 35 µm :    0
> 60 µm :    +

Härte (Pendelhärte in sec. nach König) :

< 100 sec. :    −
> 100 sec. :    0
> 140 sec. :    +

Elastizität (Erichsentiefung in mm) :

< 3 mm :    −
> 3 mm :    0
> 6 mm :    +

Lösungsmittelfestigkeit (Anzahl Doppelhübe mit einem Methylisobutylketon getränkten Wattebausch ohne sichtbare Filmveränderung) :

< 100 :    −
> 100 :    0
> 200 :    +

Vergleichbare Ergebnisse lassen sich auch mit pigmentierten Lacken erzielen.


**Patentansprüche**

1. Wasserverdünnbare Bindemittel, bestehend im wesentlichen aus einem Gemisch aus
a) 60 bis 95 Gew.-Teilen eines Carboxylgruppen und/oder Säureanhydridgruppen, sowie Hydroxylgruppen aufweisenden Copolymerisats, dessen Carboxyl- bzw. Säureanhydridgruppen zumindest teilweise zwecks Gewährleistung der Wasserlöslichkeit bzw. -dispergierbarkeit des Bindemittels in Wasser in Carboxylatgruppen überführt worden sind, und das durch Copolymerisation von
   a1) 4 bis 25 Gew.-Teilen einer α,β-ungesättigten Carbonsäure-Komponente, bestehend aus mindestens einer Verbindung ausgewählt aus der Gruppe bestehend aus Methacrylsäure, Acrylsäure, Maleinsäure, Fumarsäure, Itaconsäure und Maleinsäureanhydrid,
   a2) insgesamt 5 bis 40 Gew.-Teilen mindestens eines Hydroxyalkylesters der Methacrylsäure oder der Acrylsäure mit 2 bis 4 Kohlenstoffatomen im Hydroxyalkylrest,
   a3) insgesamt 15 bis 55 Gew.-Teilen mindestens eines olefinischen Monomeren, ausgewählt aus der Gruppe bestehend aus (i) gegebenenfalls Alkyl- und/oder Chlor-substituierten Vinyl- oder Isopropenyl-Benzolen mit insgesamt 8 bis 12 Kohlenstoffatomen und (ii) Methacrylsäurealkylestern mit 1 bis 4 Koh-

8

lenstoffatomen im Alkylrest,

a4) insgesamt 20 bis 80 Gew.-Teilen mindestens eines olefinisch ungesättigten Monomeren, ausgewählt aus der Gruppe bestehend aus (i) Hydroxylgruppen-freien Acrylsäureestern mit 1 bis 18 Kohlenstoffatomen in der Alkoholkomponente und (ii) Hydroxylgruppen-freien Methacrylsäureestern mit 5 bis 18 Kohlenstoffatomen in der Alkoholkomponente gegebenenfalls unter Mitverwendung von

a5) insgesamt bis zu 20 Gew.-Teilen an anderen ein- oder mehrfach ungesättigten Monomeren erhalten worden ist und

b) 5 bis 40 Gew.-Teilen eines Vernetzerharzes, dadurch gekennzeichnet, daß die in dem Copolymerisat a) vorliegenden Hydroxylgruppen zumindest zu 30% in mit Lactonen modifizierte Form vorliegen.

2. Verfahren zur Herstellung eines wasserverdünnbaren Bindemittels gemäß Anspruch 1

a) durch Copolymerisation der in Anspruch 1 unter a1) bis a5) genannten Monomeren, zumindest teilweise Überführung der in den Copolymerisaten vorliegenden Carbonsäure- und/oder Carbonsäureanhydridgruppen in Carboxylatgruppen zwecke Gewährleistung der Löslichkeit bzw. Dispergierbarkeit der Bindemittel in Wasser, und Vermischen des so erhaltenen Copolymerisats mit

b) 5 bis 40 Gew.-Teilen eines Vernetzerharzes und gegebenenfalls mit

c) aus der Lacktechnologie üblichen Hilfs- und Zusatzmitteln dadurch gekennzeichnet, daß man die in den Copolymerisaten a) vorliegenden Hydroxylgruppen zumindest zu 30% vor, während oder im Anschluß an die Copolymerisationsreaktion durch Umsetzung mit Lactonen unter ringöffnender Esterbildung modifiziert.

3. Verfahren gemäß Anspruch 2, dadurch gekennzeichnet, daß man zur Herstellung der Copolymerisate a)

a1) insgesamt 7 bis 16 Gew.-Teile Methacrylsäure, Acrylsäure, Maleinsäure und/oder Maleinsäureanhydrid

a2) insgesamt 10 bis 30 Gew.-Teile Hydroxyethylacrylat, Hydroxyethylmethacrylat, 2- oder 3-Hydroxypropylacrylat, 2- oder 3-Hydroxypropylmethacrylat, 2-, 3- oder 4-Hydroxybutylacrylat und/oder 2-, 3- oder 4-Hydroxybutylmethacrylat,

a3) insgesamt 20 bis 50 Gew.-Teile Styrol, Methylmethacrylat, Ethylmethacrylat und/oder Butylmethacrylat,

a4) insgesamt 25 bis 60 Gew.-Teile Methylacrylat, Ethylacrylat, n-Propylacrylat, Isopropylacrylat, n-Butylacrylat, Isobutylacrylat, tert.-Butylacrylat, 2-Pentyl(meth)acrylat, n-Hexyl(meth)acrylat, 2-Ethylhexyl(meth)acrylat, n-Octyl(meth)acrylat, n-Lauryl(meth)acrylat, n-Stearyl(meth)acrylat, Benzylacrylat und/oder 2-Phenylethylacrylat und gegebenenfalls

a5) bis zu 10 Gew.-Teile an anderen, ein- oder mehrfach olefinisch ungesättigten Monomeren verwendet.

4. Verfahren gemäß Anspruch 2 und 3, dadurch gekennzeichnet, daß man die in den Copolymerisation vorliegenden Hydroxylgruppen vor, während oder im Anschluß an die Copolymerisationsreaktion zu mindestens 60% mit einem Lacton modifiziert.

5. Verfahren gemäß Anspruch 2 bis 4, dadurch gekennzeichnet, daß man als Lacton ε-Caprolacton verwendet.

6. Verwendung der Bindemittel gemäß Anspruch 1 in wasserverdünnbaren Lacken, Beschichtungs- oder Dichtmassen.

7. Verwendung gemäß Anspruch 6 in Klar- und Decklacken.

## Claims

1. A water-dilutable binder consisting essentially of a mixture of

a) 60 to 95 parts by weight of a carboxyl-functional and/or anhydride-functional and also hydroxyl-functional copolymer, of which the carboxyl or anhydride groups have been at least partly converted into carboxylate groups to guarantee the solubility or dispersibility of the binder in water and which has been obtained by copolymerization of

a1) 4 to 25 parts by weight of an $\alpha,\beta$-unsaturated carboxylic acid component consisting of at least one compound selected from the group consisting of methacrylic acid, acrylic acid, maleic acid, fumaric acid, itaconic acid and maleic anhydride,

a2) a total of 5 to 40 parts by weight of at least one hydroxyalkyl ester of methacrylic acid or acrylic acid containing 2 to 4 carbon atoms in the hydroxyalkyl group,

a3) a total of 15 to 55 parts by weight of at least one olefinic monomer selected from the group consisting of (i) optionally alkyl- and/or chlorine-substituted vinyl or isopropenyl benzenes containing a total of 8 to 12 carbon atoms and (ii) alkyl methacrylates containing 1 to 4 carbon atoms in the alkyl group,

a4) a total of 20 to 80 parts by weight of at least one olefinically unsaturated monomer selected from the group consisting of (i) hydroxyl-free acrylates containing 1 to 18 carbon atoms in the alcohol component and (ii) hydroxyl-free methacrylates containing 5 to 18 carbon atoms in the alcohol component, optionally using

a5) a total of up to 20 parts by weight of other mono- or polyunsaturated monomers, and

b) 5 to 40 parts by weight of a crosslinking resin, characterized in that at least 30% of the hydroxyl groups present in the copolymer a) are present in lactone-modified form.

2. A process for the production of the water-dilutable binder claimed in claim 1

a) by copolymerization of the monomers mentioned under a1) to a5) in claim 1, at least partial conversion of the carboxylic acid and/or carboxylic anhydride groups present in the copolymers into carboxylate groups to guarantee the solubility or dispersibility of the binder in water and mixing of the copolymer obtained with

b) 5 to 40 parts by weight of a crosslinking resin and optionally with

c) auxiliaries and additives typically used in paint technology, characterized in that at least 30% of the hydroxyl groups present in the copolymers a) are modified by reaction with lactones before, during or after the copolymerization reaction with ring-opening ester formation.

3. A process as claimed in claim 2, characterized in that, to prepare the copolymers a),

a1) a total of 7 to 16 parts by weight methacrylic acid, acrylic acid, maleic acid and/or maleic anhydride,

a2) a total of 10 to 30 parts by weight hydroxyethyl acrylate, hydroxyethyl methacrylate, 2- or 3-hydroxypropyl acrylate, 2- or 3-hydroxypropyl methacrylate, 2-, 3- or 4-hydroxybutyl acrylate and/or 2-, 3- or 4-hydroxybutyl methacrylate,

a3) a total of 20 to 50 parts by weight styrene, methyl methacrylate, ethyl methacrylate and/or butyl methacrylate,

a4) a total of 2S to 60 parts by weight methyl acrylate, ethyl acrylate, n-propyl acrylate, isopropyl acrylate, n-butyl acrylate, isobutyl acrylate, tert.butyl acrylate, 2-pentyl (meth)acrylate, n-hexyl (meth)acrylate, 2-ethylhexyl (meth)acrylate, n-octyl (meth)acrylate, n-lauryl (meth)acrylate, n-stearyl (meth)acrylate, benzyl acrylate and/or 2-phenylethyl acrylate and optionally

a5) up to 10 parts by weight of other mono- or polyolefinically unsaturated monomers are used.

4. A process as claimed in claims 2 and 3, characterized in that at least 60% the hydroxyl groups present in the copolymers are modified with a lactone before, during or after the copolymerization reaction.

5. A process as claimed in claims 2 to 4, characterized in that ε-caprolactone is used as the lactone.

6. The use of the binders claimed in claim 1 in water-dilutable paints, coating or sealing compounds.

7. The use claimed in claim 6 in clear lacquers and finishing paints.


**Revendications**

1. Liants diluables à l'eau, consistant essentiellement en un mélange de :

a) 60 à 95 parties en poids d'un copolymère contenant des groupes carboxyle et/ou anhydride d'acide et des groupes hydroxy, dont les groupes carboxyle et anhydride d'acide sont convertis en partie au moins en groupes carboxylate pour assurer la solubilité ou dispersabilité du liant dans l'eau, et qui a été obtenu par copolymérisation de :

a1) 4 à 25 parties en poids d'un composant acide carboxylique alpha,bêta-insaturé consistant en au moins un composé choisi dans le groupe formé par l'acide méthacrylique, l'acide acrylique, l'acide maléique, l'acide fumarique, l'acide itaconique et l'anhydride maléique,

a2) au total 5 à 40 parties en poids d'au moins un ester hydroxy alkylique de l'acide méthacrylique ou de l'acide acrylique, contenant 2 à 4 atomes de carbone dans le groupe hydroxyalkyle,

a3) au total 15 à 55 parties en poids d'au moins un monomère oléfinique choisi dans le groupe consistant en (i) les vinyl- ou isopropénylbenzènes éventuellement substitués par des groupes alkyle et/ou le chlore et contenant au total 8 à 12 atomes de carbone, et (ii) les méthacrylates d'alkyle contenant 1 à 4 atomes de carbone dans le groupe alkyle,

a4) au total 20 à 80 parties en poids d'au moins un monomère à insaturation oléfinique choisi dans le groupe consistant en (i) les esters acryliques exempts de groupes hydroxy, contenant 1 à 18 atomes de carbone dans le composant alcoolique, et (ii) les esters méthacryliques exempts de groupes hydroxy et contenant 5 à 18 atomes de carbone dans le composant alcoolique, éventuellement avec utilisation conjointe de :

a5) au total jusqu'à 20 parties en poids d'autres monomères mono- ou poly-insaturés, et

b) 5 à 40 parties en poids d'une résine réticulante, caractérisés en ce que les groupes hydroxy présents dans le copolymère a) sont, en proportion d'au moins 30%, sous une forme modifiée par des lactones.

2. Procédé de préparation d'un liant diluable à l'eau selon la revendication 1,

a) par copolymérisation des monomères mentionnés sous a1) à a5) dans la revendication 1, conversion, en partie au moins, des groupes acide carboxylique et/ou anhydride d'acide carboxylique présents dans le copolymère en groupes carboxylate pour assurer la solubilité ou la dispersabilité des liants dans l'eau, et mélange du copolymère ainsi obtenu avec :

b) 5 à 40 parties en poids d'une résine réticulante, et le cas échéant avec :

c) des produites auxiliaires et additifs usuels dans l'industrie des peintures et vernis, caractérisé en ce qu'avant, durant ou après la réaction de copolymérisation, les groupes hydroxy présents dans les copolymères a), sont modifiés par réaction avec des lactones et estérification avec ouverture du cycle.

3. Procédé selon la revendication 2, caractérisé en ce que, pour la préparation des copolymères a), on utilise :

a1) au total 7 à 16 parties en poids d'acide méthacrylique, d'acide acrylique, d'acide maléique et/ou d'anhydride maléique,

a2) au total 10 à 30 parties en poids d'acrylate d'hydroxyéthyle, de méthacrylate d'hydroxyéthyle, d'acrylate de 2-ou de 3-hydroxypropyle, de méthacrylate de 2- ou de 3-hydroxypropyle, d'acrylate de 2-, de 3- ou de 4-hydroxybutyle, et/ou de méthacrylate de 2-, de 3- ou de 4-hydroxybutyle,

a3) au total 20 à 50 parties en poids de styrène, de méthacrylate de méthyle, de méthacrylate d'éthyle et/ou de méthacrylate de butyle,

a4) au total 25 à 60 parties en poids d'acrylate de méthyle, d'acrylate d'éthyle, d'acrylate de n-propyle, d'acrylate d'isopropyle, acrylate de n-butyle, d'acrylate d'isobutyle, d'acrylate de tertbutyle, de (méth)acrylate de 2-pentyle, de (méth)acrylate de n-hexyle, de (méth)acrylate de 2-éthylhexyle, de (méth)acrylate de n-octyle, de (méth)acrylate de n-lauryle, de (méth)acrylate de n-stéaryle, d'acrylate de benzyle et/ou d'acrylate de 2-phényléthyle, et le cas échéant :

a5) jusqu'à 10 parties en poids d'autres monomères à insaturation mono- ou poly-oléfinique.

4. Procédé selon les revendications 2 et 3, caractérisé en ce qu'avant, durant ou après la réaction de copolymérisation, on modifie les groupes hydroxy présents dans les copolymères, en proportions d'au moins 60%, par une lactone.

5. Procédé selon les revendications 2 à 4, caractérisé en ce que la lactone utilisée est l'epsilon-caprolactone.

6. Utilisation des liants selon la revendication 1 dans des vernis diluables à l'eau, des masses de revêtement ou d'étanchéité.

7. Utilisation selon la revendication 6, dans des vernis clairs et des peintures couvrantes.